# EUROPEAN PATENT SPECIFICATION

(11) **EP 1 188 622 B1**
(45) Date of publication and mention of the grant of the patent: **01.03.2006**
(21) Application number: 01121953.2
(22) Date of filing: 12.09.2001
(51) Int. Cl.: B60R 21/16

(54) **Folded air bag**
Gefalteter Gassack
Coussin gonflable plié

(30) Priority: 14.09.2000 US 661615
(43) Date of publication of application: 20.03.2002
(73) Proprietor: TRW Vehicle Safety Systems, Inc., Lyndhurst, OH 44124 (US)
(72) Inventor: Fischer, Kurt F., Oxford, Michigan 48371 (US); Petit, Mary C., Shelby Township, Michigan 48316 (US); Bauer, John G., Troy, Michigan 49098 (US)
(74) Representative: Geyer, Ulrich F.

(56) References cited:
- EP-A- 0 900 701
- EP-A- 0 980 796
- US-A- 5 425 551
- US-A- 5 636 861
- US-A- 5 884 939
- US-A- 6 029 996

## Description

### Background of the Invention

### Technical Field

The present invention relates to an inflatable vehicle occupant protection device, such as an air bag. In particular, the present invention relates to an air bag folded in such a manner as to reduce adverse loads on a vehicle occupant when the air bag inflates.

### Description of the Prior Art

It is known to inflate an air bag from a vehicle instrument panel to help protect an occupant of a front passenger seat of a vehicle. In some instances, the occupant may be "out of position", that is, closer than desired to the instrument panel when the air bag is inflated. The inflating air bag may get caught under the occupant's chin, increasing the neck loads on the occupant caused by the inflating air bag. Therefore, it is desirable to reduce the interaction between the inflating air bag and the occupant's head.

Further attention is drawn to EP 0 900 701 A1 which discloses a vehicle occupant protection device including a multi-chamber air bag. The different chambers of the air bag are inflated using separate gas generators.

Attention is also drawn to the document US-A-5,884,939 which discloses an air bag system for protecting a passenger seated on the front passenger seat of a vehicle. In an initial stage, the air bag is inflated mildly and in the subsequence stage, the bag is inflated also mildly. The directivity of produced gas is reduced. The air bag is inflated mildly while maintaining a large area. The air bag system comprises an air bag case having an opening on its top side, an inflator disposed inside the air bag case, the aforementioned air bag folded in the air bag case, and a diffuser mounted between the inflator and the opening in the case. The air bag is placed in a side-by-side relation to the inflator and located behind the inflator inside the case. The diffuser is provided with numerous holes for supplying the gas. The diffuser acts to regulate flow of the gas from the inflator. At least when the gas is produced from the inflator, a space is created between the outer surface of the inflator and the diffuser.

Last but not least, attention is drawn to the document EP 0 980 796 A2 which discloses an air bag apparatus for head-protection where an airbag body inflated in a curtain configuration is mounted in a folded state along a roof side rail across at least a center pillar, the airbag body includes an upper portion folded in a bellows, and a lower portion subjected to one of turning-back performed toward an occupant compartment inner side and rolling-up performed towards the occupant compartment inner side. Accordingly, even when there is a vehicle occupant compartment inner side protrusion such as a slip joint in a vehicle, the air bag body is inflated and expanded so as to cover the vehicle occupant compartment inner side protrusion from the above or ride on the same.

In accordance with the present invention an inflatable air bag, as set forth in claim 1, is provided. Preferred embodiments of the invention are claimed in the dependent claims.

### Summary of the Invention

The present invention is an inflatable air bag for helping to protect an occupant of a vehicle. The air bag has a deflated condition stored, in a container in the vehicle and has an inflated condition. The air bag when in the inflated condition has upper and lower sections. The air bag has a first portion forming the lower section of the air bag when the air bag is in the inflated condition, and a second portion forming the upper section of the air bag when the air bag is in the inflated condition. The air bag includes a back panel disposed farthest from the vehicle occupant when the air bag is in the inflated condition and a front panel disposed closest to the vehicle occupant when the air bag is in the inflated condition.

The first portion of the air bag is folded into a compact shape and stored in a lower portion of the container when the air bag is in the deflated condition. The second portion of the air bag is rolled into a compact shape and stored in an upper portion of the container when the air bag is in the deflated condition. The second portion of the air bag inflates upward and unrolls in a direction away from the vehicle occupant upon inflation of the air bag so that the front panel of the air bag is presented toward the vehicle occupant during inflation of the air bag. The first portion of the air bag inflates before the second portion of the air bag.

### Brief Description of the Drawings

The foregoing and other features of the present invention will become apparent to one skilled in the art to which the present invention relates upon consideration of the following description of the invention with reference to the accompanying drawings, in which:
Fig. 1 is a schematic side view of a portion of a vehicle including an air bag in accordance with the present invention, shown in a condition stored in the vehicle instrument panel;
Fig. 2 is an enlarged view of the air bag of Fig. 1 shown in the stored condition;
Fig. 3 is a view similar to Fig. 1 showing the air bag in a first partially inflated condition;
Fig. 4 is a view similar to Fig. 3 showing the air bag in a second partially inflated condition;
Fig. 5 is a view similar to Fig. 3 showing the air bag in a third partially inflated condition; and
Fig. 6 is a view similar to Fig. 3 showing the air bag in a substantially fully inflated condition.

### Detailed Description of an Embodiment of the Invention

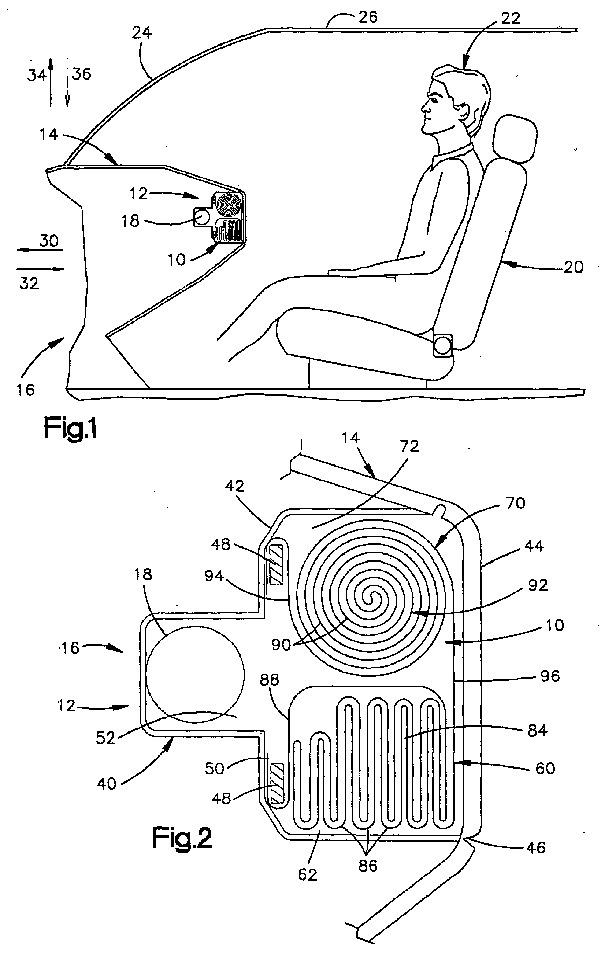

The present invention relates to an inflatable vehicle occupant protection device, such as an air bag. In particular, the present invention relates to an air bag folded in such a manner that when inflating it reduces the possibility of adverse loads on the neck of a vehicle occupant. As representative of the invention, Fig. 1 illustrates an air bag 10. The air bag 10 forms part of an air bag module 12 mounted in the instrument panel 14 of a vehicle 16. Other inflatable vehicle occupant protection devices that can be used in accordance with the invention include, for example, inflatable head liners or side curtains.

The air bag module 12 also includes an inflator indicated schematically at 18. The inflator 18 preferably contains a stored quantity of pressurized inflation fluid and an ignitable material for heating the inflation fluid. The module 12 alternatively could include an inflator that uses the combustion of gas-generating material to generate inflation fluid in the form of gas to inflate the air bag 10, or an inflator that contains only a stored quantity of pressurized inflation fluid for inflating the air bag.

The vehicle 16 includes a front passenger seat 20. A vehicle occupant 22 is illustrated in a seated position on the seat. The vehicle windshield 24 extends upward and rearward from the instrument panel 14, and merges with the vehicle roof 26. In the vehicle 16, a forward direction is illustrated by the arrow 30, and a rearward direction by the arrow 32. An upward direction in the vehicle is illustrated by the arrow 34, and a downward direction in the vehicle is illustrated by the arrow 36.

The air bag module 12 is mounted in a central (from top to bottom) location in the instrument panel 14, and is thus a "mid-mount" type of module. The air bag module 12 includes a container 40 secured in the instrument panel 14 in a manner not shown. The container 40 includes a main body portion 42 and a door 44. The door 44 is hinged to the main body portion 42 of the container 40 at the top of the container. A tear seam illustrated schematically at 46 releasably connects the bottom edge of the door 44 with the main body portion 42 of the container 40. It should be understood that the container 40 may have a different configuration from the one shown, or may be a portion of the instrument panel 14 itself.

A retaining ring, or retainer, 48 is fixed to the container 40 in a manner not shown. A mouth portion 50 of the air bag 10 is secured to the retainer 48 and, thereby, to the container 40. The mouth portion 50 defines an inflation fluid opening 52 of the air bag 10, through which inflation fluid from the inflator 18 is directed to inflate the air bag.

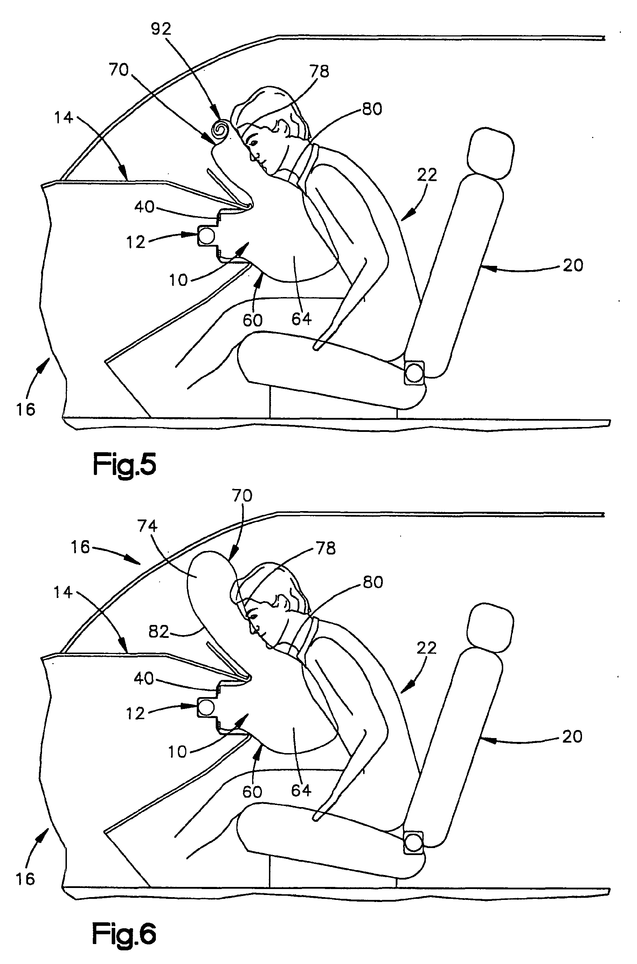

The air bag 10 has a first portion 60 and a second portion 70. The first portion 60, or lower portion, of the air bag 10 is stored in a lower portion 62 of the container 40. The first portion 60 of the air bag 10, when inflated as described below, forms a first section or lower section 64 (Figs. 5 and 6) of the air bag. The second portion 70, or upper portion, of the air bag 10 is stored in an upper portion 72 (Fig. 2) of the container 40. The second portion 70 of the air bag 10, when inflated as described below, forms a second section or upper section 74 (Figs. 5 and 6) of the air bag.

The air bag 10 includes a front panel or contact face 80 (Fig. 6) that is closest to the vehicle occupant 22 when the air bag is inflated, and a back panel 82 that is farthest from the vehicle occupant when the air bag is inflated. The front panel 80 and the back panel 82 are, preferably, separate panels of material sewn together to form the air bag 10. The front panel 80 and the back panel 82 may, alternatively, be two portions of a single panel of fabric material.

The first portion 60 (Fig. 1) of the air bag 10 is folded in a Z-fold configuration to form a group, or stack, 84 of first folded portions 86 of the air bag. The first folded portions 86 of the air bag 10 extend vertically in the lower portion 62 of the container 40. An end portion 88 of the first portion 60 of the air bag 10 merges with the mouth portion 50 and is thereby secured to the retainer 48. The end portion 88 extends between and interconnects the retainer 48 and the stacked first portion 60 of the air bag 10.

It should be understood that the illustration of the stack 84 in Fig. 2 is only schematic, and that a larger or smaller number of folded portions 86 of the air bag 10 may be included in the first portion 60 of the air bag as folded. In addition, the folded portions 86 may be stacked so that they extend horizontally, rather than vertically, in the lower portion 62 of the container 40.

The second portion 70 of the air bag 10, when in the stored condition shown in Fig. 2, includes a plurality of layers 90 formed in a roll 92 with succeedingly smaller diameters. The layers 90 define a passage through which inflation fluid from the inflator 18 can flow to inflate the second portion 70 of the air bag 10. An end portion 94 of the second portion 70 of the air bag 10 merges with the mouth portion 50 and is thereby secured to the retainer 48. The end portion 94 extends between and interconnects the retainer 48 and the rolled second portion 70 of the air bag 10.

An intermediate portion 96 of the folded air bag 10 extends between and interconnects the stacked first portion 60 of the air bag and the rolled second portion 70 of the air bag. The roll 92 is configured so that the intermediate portion 96 is disposed on the outside of the roll and extends from the roll along the inside of the door 44. Thus, the intermediate portion 96 is between the roll 92 and the vehicle occupant 22.

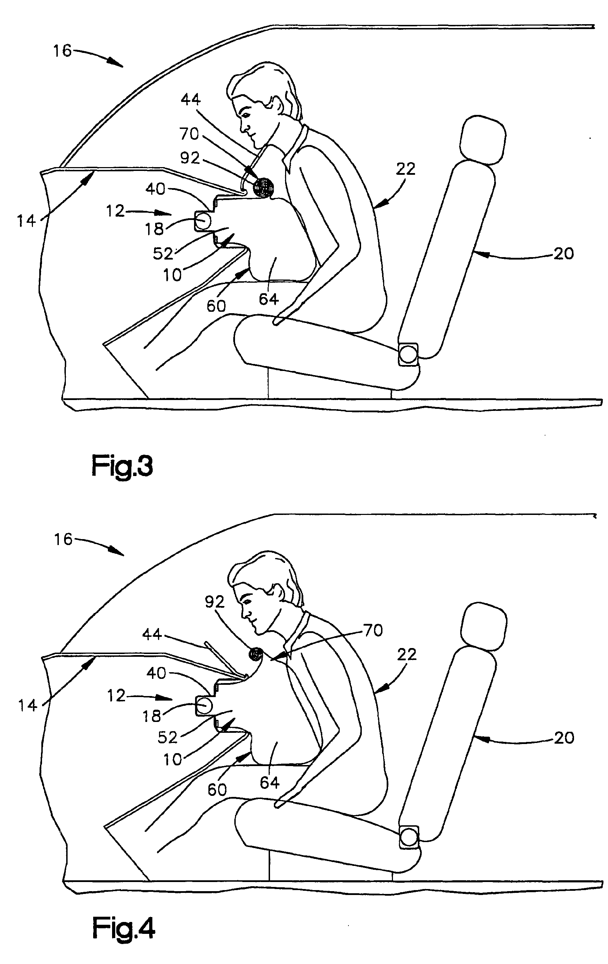

Figs. 3-6 illustrate the inflation of the air bag 10 to help protect the vehicle occupant 22. The occupant 22 is illustrated as being "out of position" in the seat 20, that is, leaning forward in the seat, close to the vehicle instrument panel 14.

Upon actuation of the inflator 18, the container 40 directs inflation fluid from the inflator into the mouth portion 50 of the air bag. The inflation fluid from the inflator 18 contacts the air bag 10 and causes the air bag to begin to inflate. As the air bag 10 begins to inflate, it pushes open the door 44. The door 44 pivots upward as viewed in Fig. 3. Because the occupant 22 is leaning forward, the door 44 may be caught under the occupant's chin as shown in Fig. 3.

The air bag 10 moves from the deflated, folded condition shown in Fig. 1 to a first, partially inflated condition shown schematically in Fig. 3. The inflation fluid from the inflator flows between the roll 92 and the stack 84, into the roll 92, and into the stack 84.

The stacked first portion 60 of the air bag 10 inflates before the rolled second portion 70, because it is easier for the inflation fluid to flow into and expand a Z-folded or pleated portion of an air bag, than a rolled-up portion of an air bag. As a result, unrolling of the roll 92 and inflation of the second portion 70 of the air bag 10 are substantially delayed as compared to unfolding and inflation of the first portion 60. Therefore, as illustrated schematically in Fig. 3, the first portion 60 of the air bag 10 inflates, at least partially, prior to any substantial inflation of the rolled second portion 70 of the air bag. As the first portion 60 of the air bag 10 inflates, it contacts the torso of the occupant 22 and begins to push the occupant in the rearward direction 32 in the vehicle 16, away from the instrument panel 14.

Eventually, as the air bag 10 inflates more completely, the roll 92 unrolls and inflates as shown sequentially in Figs. 4-6. Specifically, the door 44 releases from under the occupant's chin, and the rolled second portion 70 of the air bag 10 begins to inflate more, as shown in Fig. 4. The rolled second portion 70 of the air bag 10 continues to unroll in the upward direction 34, as shown in Fig. 5. The second portion 70 of the air bag 10 is the final portion of the air bag to inflate.

Because of the direction in which the material of the second portion 70 of the air bag 10 is rolled, the second portion unrolls away from the occupant 22. Specifically, the rolled layers 90 of the air bag 10 are rolled along the back panel 82 of the air bag, opposite the front panel or contact face 80 of the air bag. The front panel 80 of the air bag 10 is presented toward the vehicle occupant 22 during inflation of the air bag. The front panel 80 of the air bag 10 contacts the head and face of the occupant 22, and the back panel 82 of the air bag does not. Therefore, inflation of the air bag 10 causes the rolled portions 90 to unroll from a side of the air bag 10 opposite the vehicle occupant 22.

The second portion 70 of the air bag 10 unrolls in a clockwise direction (as viewed in Figs. 3-6) and in a direction away from the vehicle occupant 22, that is, in the forward direction 30 in the vehicle. As a result, the second portion 70 does not scrape across the face of the vehicle occupant 22. Instead, a relatively flat portion 78 of the front panel 80 moves into contact with the head of the vehicle occupant 22, and remains there as the second portion 70 of the air bag 10 continues to unroll. Therefore, the second portion 70 of the air bag 10 is unlikely to get caught under the chin of the vehicle occupant 22.

When the second portion 70 of the air bag 10 unrolls and then inflates fully, it pushes the head of the occupant 22 rearward in the vehicle 16. This action does not create unacceptable loadings on the occupant's neck, because the torso of the occupant 22 is already being moved rearward by the inflated first portion 60 of the air bag 10.

From the above description of the invention, those skilled in the art will perceive improvements, changes and modifications in the invention. Such improvements, changes and modifications within the skill of the art are intended to be covered by the appended claims.

## Claims

1. An inflatable air bag (10) for helping to protect an occupant (22) of a vehicle (16), said air bag having a deflated condition stored in a container (40) in the vehicle (16) and being inflatable into an inflated condition, said air bag (10) when in the inflated condition having upper and lower sections (64, 74);
said air bag (10) having a first portion (60) forming said lower section (64) of said air bag when said air bag is in the inflated condition, said air bag (10) having a second portion (70) forming said upper section (74) of said air bag when said air bag is in the inflated condition;
said air bag including a back panel (82) disposed farthest from the vehicle occupant (22) when said air bag is in the inflated condition and a front panel (80) disposed closest to the vehicle occupant (22) when said air bag is in the inflated condition;
said first portion (60) of said air bag being folded into a compact shape and stored in a lower portion (62) of said container (40) when said air bag (10) is in the deflated condition;
said second portion (70) of said air bag being rolled into a compact shape and stored in an upper portion (72) of said container (40) when said air bag is in the deflated condition;
said second portion (70) of said air bag inflating upward and unrolling in a direction away from the vehicle occupant (22) upon inflation of said air bag (10) so that said front panel (80) of said air bag is presented toward the vehicle occupant (22) during inflation of said air bag;
said first portion (60) of said air bag inflating before said second portion (70) of said air bag.

2. An air bag (10) as set forth in claim 1 wherein said first portion (60) of said air bag is folded in a Z-fold configuration when said air bag (10) is in the deflated condition, said first portion (60) of said air bag inflating outward toward the vehicle occupant (22) as said air bag is inflated.

3. An air bag (10) as set forth in claim 1 wherein said first portion (60) of said air bag is pleated when said air bag is in the deflated condition.

4. An air bag as set forth in claim 1 wherein said rolled portion (70) of said air bag is rolled along said back panel (82) of said air bag, opposite said front panel (80) of said air bag, and said rolled portion (70) unrolls from a side of said air bag opposite from the vehicle occupant (22) upon inflation of said air bag.

5. An inflatable air bag (10) as set forth in claim 1, wherein
said first portion (60) of said air bag (10) being folded in a Z-fold configuration to form a stack of first folded portions of said air bag (10) when said air bag (10) is in the deflated condition,
said first folded portions extending vertically in said lower portion of said container,
said first portion (60) of said air bag (10) unfolding outward toward the vehicle occupant (22) as said air bag (10) is inflated.

6. An inflatable air bag (10) as set forth in claim 1, wherein said air bag (10) further comprising a third intermediate portion extending between said first portion (60) and said second portion (70) when said air bag (10) is in the deflated condition;
wherein said first portion (60) of said air bag (10) inflating at least partially with inflation fluid contacting said third intermediate portion of said air bag (10) before any substantial inflation of said second portion (70) of said air bag (10),
all of said first portion (60) of said air bag (10) being folded in a Z-fold configuration to form a stack of folded portions of said air bag (10) when said air bag (10) is in the deflated condition, said folded portions extending only vertically in said lower portion of said container, said folded portions and said third intermediate portion forming part of said front panel of said air bag (10) when said air bag (10) is in the inflated condition,
said first portion (60) of said air bag (10) unfolding outward toward the vehicle occupant (22) as said air bag (10) is inflated.

## Patentansprüche

1. Ein aufblasbarer Airbag (10), um beim Schutz eines Insassen (22) eines Fahrzeugs (16) zu helfen, wobei der Airbag einen in einem Behälter (40) in dem Fahrzeug (16) gelagerten nicht aufgeblasenen Zustand besitzt und in einen aufgeblasenen Zustand aufblasbar ist, wobei der Airbag (10) in dem aufgeblasenen Zustand obere und untere Abschnitte (64, 74) besitzt;
wobei der Airbag (10) einen ersten Teil (60) besitzt, der den unteren Abschnitt (64) des Airbags bildet, wenn der Airbag sich in dem aufgeblasenen Zustand befindet, wobei der Airbag (10) einen zweiten Teil (70) besitzt, der den oberen Abschnitt (74) des Airbags bildet, wenn sich der Airbag in dem aufgeblasenen Zustand befindet;
wobei der Airbag einen hinteren Zuschnitt (82) umfasst, der am weitesten entfernt von dem Fahrzeuginsassen (22) ist, wenn sich der Airbag in dem aufgeblasenen Zustand befindet, und einen vorderen Zuschnitt (80), der dem Fahrzeuginsassen (22) am nächsten angeordnet ist, wenn sich der Airbag in dem aufgeblasenen Zustand befindet;
wobei der erste Teil (60) des Airbags in eine kompakte Form gefaltet und in einem unteren Teil (62) des Behälters (40) gelagert ist, wenn sich der Airbag in dem nicht aufgeblasenen Zustand befindet;
wobei der zweite Teil (70) des Airbags in eine kompakte Form gerollt und in einem oberen Teil (72) des Behälters (40) gelagert ist, wenn sich der Airbag in dem nicht aufgeblasenen Zustand befindet;
wobei sich der zweite Teil (70) des Airbags beim Aufblasen des Airbags (10) nach oben aufbläst und in einer Richtung weg von dem Fahrzeuginsassen (22) entrollt, so dass der vordere Zuschnitt (80) des Airbags während des Aufblasens des Airbags zu dem Fahrzeuginsassen (22) hin zeigt; und
wobei sich der erste Teil (60) des Airbags vor dem zweiten Teil (70) des Airbags aufbläst.

2. Airbag (10) gemäß Anspruch 1, wobei der erste Teil (60) des Airbags in eine Z-Falten-Konfiguration gefaltet ist, wenn sich der Airbag (10) in dem nicht aufgeblasenen Zustand befindet, wobei sich der erste Teil (60) des Airbags nach außen zu dem Fahrzeuginsassen (22) hin aufbläst, wenn der Airbag aufgeblasen wird.

3. Airbag (10) gemäß Anspruch 1, wobei der erste Teil (60) des Airbags gefaltet ist, wenn sich der Airbag in dem nicht aufgeblasenen Zustand befindet.

4. Airbag (10) gemäß Anspruch 1, wobei der gerollte Teil (70) des Airbags entlang dem hinteren Zuschnitt (82) des Airbags gerollt ist, und zwar gegenüber dem Vorderzuschnitt (80) des Airbags, und wobei sich beim Aufblasen des Airbags der gerollte Teil (70) von einer dem Fahrzeuginsassen (22) gegenüberliegenden Seite des Airbags entrollt.

5. Aufblasbarer Airbag (10) gemäß Anspruch 1, wobei der erste Teil (60) des Airbags (10) in einer Z-Falten-Konfiguration gefaltet ist, um einen Stapel zuerst gefalteter Teile des Airbags (10) zu bilden, wenn sich der Airbag (10) in dem nicht aufgeblasenen Zustand befindet,
wobei sich die ersten gefalteten Teile vertikal in den unteren Teil des Behälters erstrecken, und
wobei sich der erste Teil (60) des Airbags (10) nach außen zu dem Fahrzeuginsassen (22) hin entfaltet, wenn der Airbag (10) aufgeblasen wird.

6. Aufblasbarer Airbag (10) gemäß Anspruch 1, wobei der Airbag (10) ferner einen dritten mittleren Teil aufweist, der sich zwischen dem ersten Teil (60) und dem zweiten Teil (70) erstreckt, wenn sich der Airbag (10) in dem nicht aufgeblasenen Zustand befindet;
wobei sich der erste Teil (60) des Airbags (10) zumindest teilweise mit Aufblasströmungsmittel aufbläst, wobei er den dritten mittleren Teil des Airbags (10) vor irgendeinem beträchtlichen Aufblasen des zweiten Teils (70) des Airbags (10), kontaktiert.
wobei der gesamte erste Teil (60) des Airbags (10) in einer Z-Falten-Konfiguration gefaltet ist, um einen Stapel gefalteter Teile des Airbags (10) zu bilden, wenn sich der Airbag (10) in dem nicht aufgeblasenen Zustand befindet, wobei sich die gefalteten Teile nur vertikal in den unteren Teil des Behälters erstrecken, wobei die gefalteten Teile und der dritte mittlere Teil einen Teil des vorderen Zuschnitt des Airbags (10) bilden, wenn sich der Airbag (10) in dem aufgeblasenen Zustand befindet, und
wobei sich der erste Teil (60) des Airbags (10) nach außen zu dem Fahrzeuginsassen (22) hin entfaltet, wenn sich der Airbag (10) aufbläst.

## Revendications

1. Coussin de sécurité gonflable (10) destiné à aider à protéger un occupant (22) d'un véhicule (16), ledit coussin de sécurité ayant une condition dégonflée stocké dans un conteneur (40) dans le véhicule (16) et pouvant être gonflé dans une condition gonflée, ledit coussin de sécurité (10), lorsqu'il est dans la condition gonflée, ayant des sections supérieure et inférieure (64, 74) ;
ledit coussin de sécurité (10) ayant une première partie (60) formant ladite section inférieure (64) dudit coussin de sécurité lorsque ledit coussin de sécurité est dans la condition gonflée, ledit coussin de sécurité (10) ayant une deuxième partie (70) formant ladite section supérieure (74) dudit coussin de sécurité lorsque ledit coussin de sécurité est dans la condition gonflée ;
ledit coussin de sécurité comprenant un panneau arrière (82) disposé le plus loin de l'occupant du véhicule (22) lorsque ledit coussin de sécurité est dans la condition gonflée et un panneau avant (80) placé le plus près de l'occupant du véhicule (22) lorsque ledit coussin de sécurité est dans la condition gonflée ;
ladite première partie (60) dudit coussin de sécurité étant pliée en une forme compacte et stockée dans la partie inférieure (62) dudit conteneur (40) lorsque ledit coussin de sécurité (10) est dans la condition dégonflée ;
ladite deuxième partie (70) dudit coussin de sécurité étant enroulée en une forme compacte et stockée dans une partie supérieure (72) dudit conteneur (40) lorsque ledit coussin de sécurité est dans la condition dégonflée ;
ladite deuxième partie (70) dudit coussin de sécurité se gonflant vers le haut et se déroulant dans une direction s'éloignant de l'occupant du véhicule (22) lors du gonflage dudit coussin de sécurité (10) de telle sorte que ledit panneau avant (80) dudit coussin de sécurité soit présenté vers l'occupant du véhicule (22) pendant le gonflage dudit coussin de sécurité ;
ladite première partie (60) dudit coussin de sécurité se gonflant avant ladite deuxième partie (70) dudit coussin de sécurité.

2. Coussin de sécurité (10) selon la revendication 1 dans lequel ladite première partie (60) dudit coussin de sécurité est pliée dans une configuration à plis en Z lorsque ledit coussin de sécurité (10) est dans la condition dégonflée, ladite première partie (60) dudit coussin de sécurité se gonflant vers l'extérieur vers l'occupant du véhicule (22) lorsque ledit coussin de sécurité est gonflé.

3. Coussin de sécurité (10) selon la revendication 1 dans lequel ladite première partie (60) dudit coussin de sécurité est pliée en accordéon lorsque ledit coussin de sécurité est dans la condition dégonflée.

4. Coussin de sécurité (10) selon la revendication 1 dans lequel ladite partie roulée (70) dudit coussin de sécurité est enroulée le long dudit panneau arrière (82) dudit coussin de sécurité, à l'opposé dudit panneau avant (80) dudit coussin de sécurité, et ladite partie roulée (70) se déroule depuis un côté dudit coussin de sécurité situé à l'opposé de l'occupant du véhicule (22) lors du gonflage dudit coussin de sécurité.

5. Coussin de sécurité gonflable (10) selon la revendication 1, dans lequel
ladite première partie (60) dudit coussin de sécurité (10) étant pliée dans une configuration à plis en Z pour former une pile de premières parties pliées dudit coussin de sécurité (10) lorsque ledit coussin de sécurité (10) est dans la condition dégonflée,
lesdites premières parties pliées s'étendant verticalement dans ladite partie inférieure dudit conteneur,
ladite première partie (60) dudit coussin de sécurité (10) se dépliant vers l'extérieur vers l'occupant du véhicule (22) lorsque le coussin de sécurité (10) est gonflé.

6. Coussin de sécurité gonflable (10) selon la revendication 1, dans lequel ledit coussin de sécurité (10) comprend en outre une troisième partie intermédiaire s'étendant entre ladite première partie (60) et ladite deuxième partie (70) lorsque ledit coussin de sécurité (10) est dans la condition dégonflée ;
dans lequel ladite première partie (60) dudit coussin de sécurité (10) se gonfle au moins partiellement avec le fluide de gonflage entrant en contact avec ladite troisième partie intermédiaire dudit coussin de sécurité (10) avant tout gonflage sensible de ladite deuxième partie (70) dudit coussin de sécurité (10),
la totalité de ladite première partie (60) du coussin de sécurité (10) étant pliée dans une configuration à plis en Z pour former une pile de parties pliées dudit coussin de sécurité (10) lorsque ledit coussin de sécurité (10) est dans la condition dégonflée, lesdites parties pliées s'éténdant uniquement verticalement dans ladite partie inférieure dudit conteneur, lesdites parties pliées et ladite troisième partie intermédiaire formant une partie dudit panneau avant dudit coussin de sécurité (10) lorsque ledit coussin de sécurité (10) est dans la condition gonflée ;
ladite première partie (60) dudit coussin de sécurité (10) se dépliant vers l'extérieur vers l'occupant du véhicule (22) lorsque ledit coussin de sécurité (10) est gonflé.
